# EUROPEAN PATENT APPLICATION

(11) **EP 4 710 757 A1**
(43) Date of publication of application: **18.03.2026**
(21) Application number: 24856332.2
(22) Date of filing: 09.08.2024
(51) Int. Cl.: A01K 61/55

(54) **AQUACULTURE BASKET**

(30) Priority: 21.08.2023 JP 2023133808
(71) Applicant: Umiotoko Corporation, Fujitsu-gun, Saga 849-1613 (JP)
(72) Inventor: UMETSU Satoshi, Fujitsu-gun, Saga 849-1613 (JP)
(74) Representative: Hasegawa, Kan
(86) International application number: PCT/JP2024/028607
(87) International publication number: WO 2025/041641

(57) **Abstract**

[Problem] In conventional aquaculture baskets, the opening is located on the upper or side surface of the basket, which makes it difficult to remove oysters from the basket. Furthermore, oysters inside the basket cannot be easily removed unless the basket is detached from the aquaculture cable.

[Solution] An aquaculture basket according to the present invention configured to be placed underwater and connected to an aquaculture cable includes a front surface; a rear surface; an upper surface; and a lower surface. The front and rear surfaces are substantially parallel to a plane perpendicular to the extending direction of the aquaculture cable. The lower surface has a downwardly convex curved shape when viewed from the front side, and includes an opening for inserting and removing cultured objects.

## Description

### Technical Field

The present invention relates to an aquaculture basket.

### Background Art

Aquaculture using aquaculture baskets has been actively conducted in seas, lakes, rivers, ponds, and tanks for farming marine products such as oysters, abalone, crabs, sea cucumbers, sea urchins, and seaweed. The following describes the use of baskets for farming each type of marine product.

Oyster farming has long been a thriving part of the aquaculture industry in Japan. In recent years, technological advancements have also been made in oyster aquaculture, leading to the development of more efficient and environmentally friendly farming methods. One such method is "oyster farming using baskets."

Oyster farming using baskets allows oysters to move within the basket, which reduces the attachment of unwanted substances to the oysters and prevents pollution of the sea, unlike conventional methods. As the baskets are moved, the oysters roll, which results in aesthetically pleasing shell shapes. Additionally, exposing the oysters to air (i.e., drying them) encourages repeated opening and closing of the shells, thereby cultivating stronger and more vigorous oysters. Strengthening the vitality of the farmed oysters enables them to be preserved for longer periods, making it possible to produce oysters suitable for export overseas.

Conventional farming methods suffered from predation by fish and flatworms, and required significant labor. In contrast, farming oysters inside baskets provides protection from such predators.

In abalone aquaculture, the method using aquaculture baskets involves fixing juvenile abalones inside specially designed baskets or nets and submerging them in the sea. While inside the baskets, the abalones are protected from predators and absorb nutrients from natural seawater as they grow. Using baskets simplifies abalone management and harvesting, and reduces the impact of seabed environmental changes and predators. This basket-based aquaculture method is widely adopted by aquaculture operators as a technique to achieve uniform quality and mass production.

In crab aquaculture, the use of aquaculture baskets involves placing crabs into baskets or nets and submerging them in the sea. This method protects the crabs from predators and other external dangers. Growth within the baskets also reduces the risk of fighting or injury among the crabs. Using baskets facilitates efficient management and harvesting of the crabs and reduces susceptibility to environmental changes. As such, aquaculture using baskets is a method aimed at maintaining stable production volume and quality.

In sea cucumber aquaculture, the method using aquaculture baskets involves placing juvenile sea cucumbers into baskets or nets and submerging them in the sea. Growing sea cucumbers inside baskets protects them from predators and disease, while making it easier to maintain stable environmental conditions. The use of baskets also improves efficiency in managing the aquaculture environment and harvesting. Since sea cucumbers are benthic organisms, living inside the baskets resembles their natural habitat and supports healthy growth. This method is a key technique for efficiently producing high-quality sea cucumbers.

In sea urchin aquaculture, the method involves placing sea urchin larvae or juveniles into baskets or nets and submerging them in the sea. This basket-based method protects sea urchins from predators and disease, while also helping to stabilize environmental conditions. The use of baskets enables efficient management and harvesting of the sea urchins, reduces fighting among individuals, and minimizes injuries or damage. This method is beneficial for aquaculture operators aiming to mass-produce sea urchins while maintaining consistent quality.

In seaweed aquaculture, the method involves securing seedlings to baskets or nets and floating them in the sea for cultivation. Using baskets allows seaweed to grow stably at a fixed depth, making it less susceptible to strong currents or stormy weather. Furthermore, baskets allow for efficient harvesting and management. This method is particularly suitable for deep-sea seaweeds or varieties that require specific light conditions or water depth for growth. It is a method that enables uniform quality and stable production.

Patent Literature 1 discloses an example of an aquaculture basket for oyster farming. The aquaculture basket is connected to a cable. Further, by designing the basket to be laterally elongated with respect to the cable, the basket is made easier to invert (Patent Literature 1).

### Citation List

### Patent Literature

Patent Literature 1: WO 2019/151879 (Marlborough Oysters Limited)

### Summary of Invention

### Technical Problem

In conventional aquaculture baskets, since the opening is located on the upper surface or a side surface of the basket, it is difficult to remove oysters from the aquaculture basket. Moreover, the oysters in the basket are difficult to remove unless the basket is first detached from the aquaculture cable.

### Solution to Problem

An aquaculture basket connected to an aquaculture cable placed underwater according to the present invention has a front surface, a back surface, an upper surface, and a lower surface. The front surface and back surface are aligned in the extension direction of the aquaculture cable. The shape of the lower surface is a downward convex curve when viewed from the front side. The lower surface includes an opening through which the cultured object can be inserted and removed.

### Effects of Invention

In the aquaculture basket of the present invention, since the opening is provided on the lower surface of the basket, it becomes easier to insert and remove the cultured object. By rotating the basket around its rotational axis to retrieve the contents, the cultured object can be removed at a convenient height without applying shock.

### Brief Description of Drawings

FIG. 1A is a perspective view of an embodiment of the aquaculture basket of the present invention.
FIG. 1B is another perspective view of the embodiment of the aquaculture basket.
FIG. 1C is a front view of the embodiment of the aquaculture basket.
FIG. 1D is another front view of the embodiment of the aquaculture basket.
FIG. 1E is a bottom view of the embodiment of the aquaculture basket.
FIG. 1F is another bottom view of the embodiment of the aquaculture basket.
FIG. 1G is yet another bottom view of the embodiment of the aquaculture basket.
FIG. 2A is a photograph showing the embodiment of the aquaculture basket of the present invention.
FIG. 2B is another photograph showing the embodiment of the aquaculture basket.
FIG. 3A is a comparison between the aquaculture basket of the present invention and a comparative examples.
FIGS. 3B-1 and 3B-2 are another comparison between the aquaculture basket of the first embodiment and a comparative example.

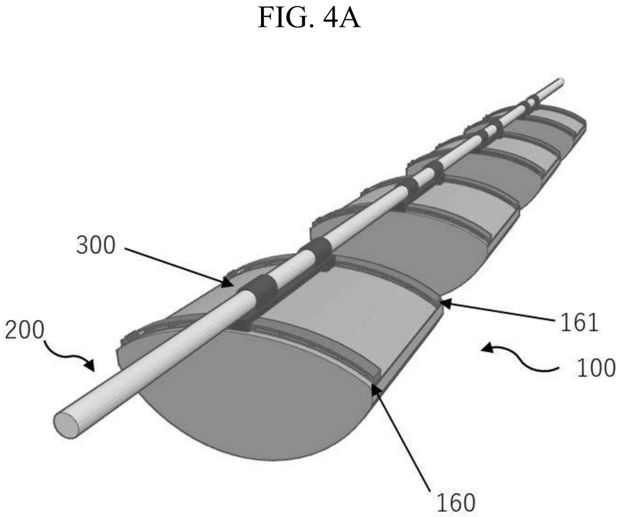

FIG. 4A is an example showing the connection of multiple aquaculture baskets.

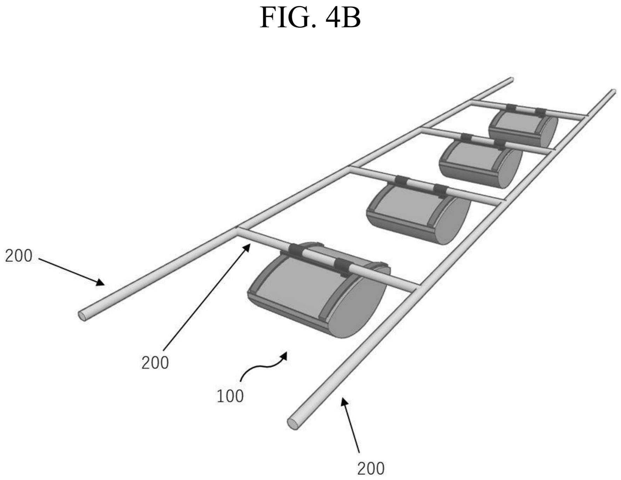

FIG. 4B is another example showing the connection of multiple aquaculture baskets.

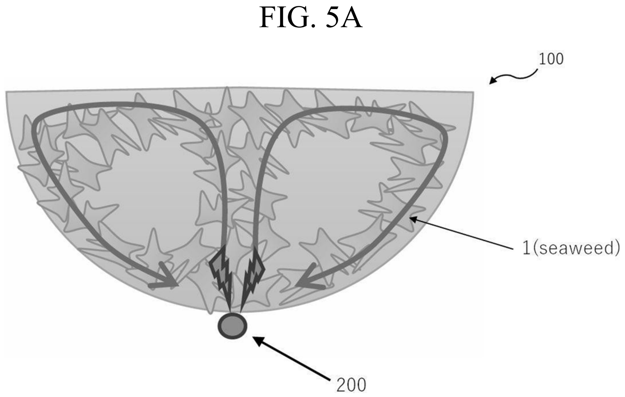

FIG. 5A shows an embodiment of the aquaculture basket used for cultivating seaweed.

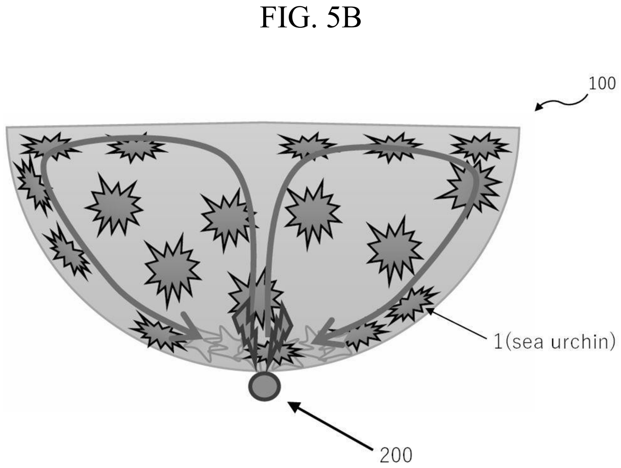

FIG. 5B shows an embodiment of the aquaculture basket used for cultivating sea urchins.

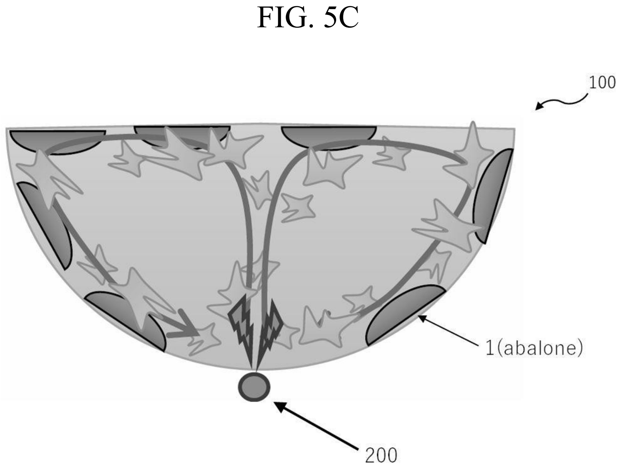

FIG. 5C shows an embodiment of the aquaculture basket used for cultivating abalone.

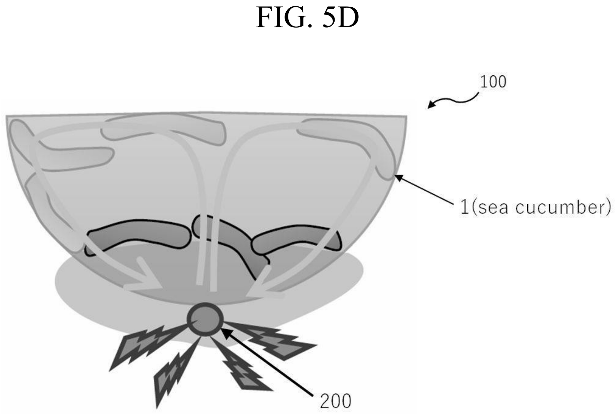

FIG. 5D shows an embodiment of the aquaculture basket used for cultivating sea cucumbers.

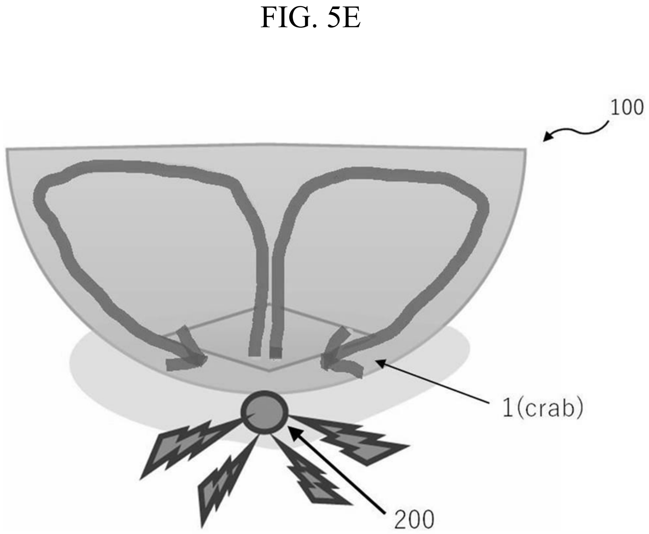

FIG. 5E shows an embodiment of the aquaculture basket used for cultivating crabs.

### Reference Signs List

100: Aquaculture basket
110: Front surface of aquaculture basket
120: Rear surface of aquaculture basket
130: Upper surface of aquaculture basket
140: Lower surface of aquaculture basket
150: Side surface of aquaculture basket
160: Joint portion (front side)
161: Joint portion (back side)
200: External attachment member (e.g., aquaculture cable, float, container, etc.)
300: Auxiliary part (auxiliary member)
310: Protruding portion of auxiliary part
400: Opening of aquaculture basket
410: Lid of opening of aquaculture basket

### Description of Invention

An embodiment of the present invention will now be described with reference to the drawings.

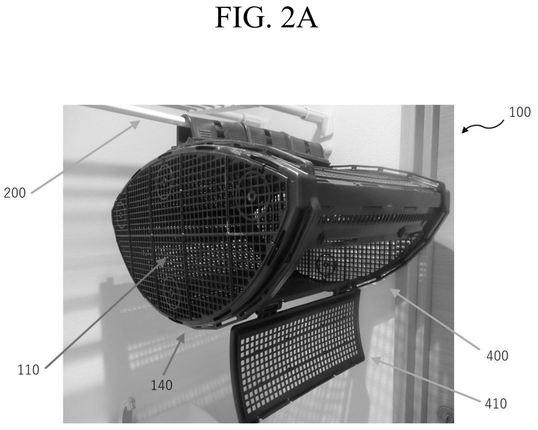

The aquaculture basket of the present invention adopts a mesh structure on its surfaces (upper surface, lower surface, front surface, rear surface, and side surfaces) in order to prevent cultured objects from falling out and to allow appropriate circulation of seawater between the inside and outside of the basket. However, the surface structure does not necessarily have to be mesh. The illustrations for the embodiment do not specifically show this surface structure. Known structures may be used. FIG. 2A shows a photograph of an example embodiment of the aquaculture basket. The surface of the aquaculture basket shown in FIG. 2A has a mesh structure.

When the aquaculture basket is installed undersea, the surface facing the direction of the sun is referred to as the "upper surface," and the surface facing the direction of the seabed is referred to as the "lower surface." Examples of the external attachment member 200 in the present invention include an aquaculture cable, a float, or a container. The following explanation focuses primarily on illustrations using an aquaculture cable as the external attachment member. Even when using a float or container, the basic concept remains unchanged, and detailed explanation is omitted.

In actual oyster aquaculture using the aquaculture basket, the aquaculture cable is installed on the water surface or on a vessel, and the aquaculture basket is connected to the aquaculture cable. The aquaculture cable and aquaculture basket may also be connected on land and then transported offshore. When used undersea or near the seabed, the aquaculture cable and aquaculture basket are lowered from the water surface. Furthermore, the aquaculture basket of the present invention may be used in freshwater, freshwater lakes, brackish water, brackish lakes, estuarine water, saltwater environments, and tanks. By providing floats on the aquaculture cable and the aquaculture basket and adjusting the buoyancy, the aquaculture basket can be installed at the water surface, underwater, or on the seabed. In the explanation that follows, examples mainly involve installation near the water surface, but installation in other locations is also possible.

The aquaculture basket of the present invention can swing with the aquaculture cable serving as a rotational axis in response to waves and swells. Therefore, the auxiliary member is not fixed to the aquaculture cable, and the auxiliary member is configured to rotate around the aquaculture cable.

### <Embodiment 1>

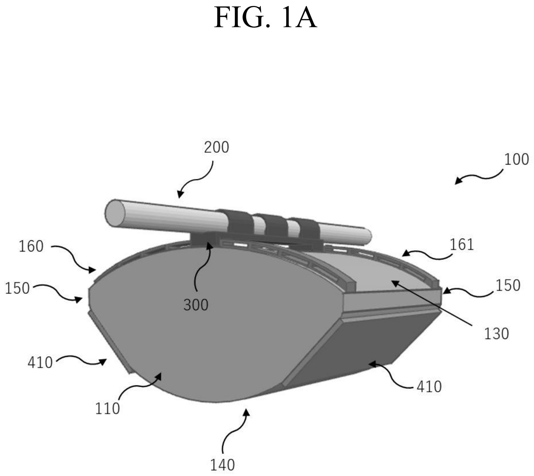

Illustrations of one example of an oyster aquaculture basket 100 according to the present invention are shown in FIGS. 1A to 1C.

### <FIG. 1A>

FIG. 1A is a perspective view of the aquaculture basket 100. The aquaculture basket 100 includes a front surface 110, a rear surface 120, an upper surface 130, and a lower surface 140. The front and rear surfaces are substantially parallel to a surface perpendicular to the extension direction of the aquaculture cable, but they do not necessarily need to be approximately parallel..

An auxiliary part 300 is an auxiliary member for connecting the aquaculture cable 200 to the aquaculture basket 100. The aquaculture basket 100 is connected to the aquaculture cable 200 via the auxiliary part 300.

The auxiliary part 300 is detachable from the aquaculture basket. On the upper surface of the aquaculture basket, joint portions 160 and 161 are provided. The joint portion 160 is located on the front surface side 110 of the aquaculture basket, and the joint portion 161 is located on the rear surface side 120. The joint portions 160 are each arranged in a plane perpendicular to the extension direction of the aquaculture cable. Likewise, the joint portions 161 are arranged in the same perpendicular plane. The joint portions 160 and 161 are paired, and one pair of joint portions 160 and 161 connects the auxiliary part 300 to the aquaculture basket 100. Two or more such pairs of joint portions are provided.

By attaching the aquaculture cable 200 to two or more of the various joint portions, the posture of the aquaculture basket 200 can be intentionally and easily adjusted.
When viewed from the front (or back) side, the shape of the lower surface 140 of the aquaculture basket is a downward convex curve-specifically, a portion of a circular arc. Similarly, the shape of the upper surface of the aquaculture basket is an upward convex curve when viewed from the front (or back) side.

The joint portions 160 and 161 are designed as concave features to engage with a convex member (310) provided on the auxiliary part 300. In FIG. 1A, the joint portions 160 and 161 have a structure with holes. Conversely, the joint portions may be designed as convex portions that engage with concave members provided on the auxiliary part 300. Considering operability on unstable footing at sea, a one-touch fastening mechanism such as a buckle is preferable for connecting the auxiliary part 300 to the joint portions 160 and 161. Alternatively, a pin that can be fastened in one motion may also be used. In FIG. 1A, the hole is elongated horizontally, but the hole shape is not limited to this.

Although the joint portions 160 and 161 are shown protruding from the upper surface of the basket in FIG. 1A, they may instead be embedded in the upper surface. Alternatively, the joint portions 160 and 161 may be provided on the lower surface of the basket.

The joint portions 160 and 161 may be integrally formed with the side surfaces of the basket, but they may also be designed to be detachable.

A feature of the present invention is that the lower surface 140 of the basket is provided with an opening 400 for handling cultured objects. A lid 410 for closing the opening is provided at the opening 400. In FIG. 1A, the opening 400 is covered by the lid 410, and thus the opening 400 is not visible. In FIG. 1A, there are two openings 400 (lids 410), but having just one is also acceptable.

Because the aquaculture basket of the present invention has an opening on its lower surface, it becomes easier to load and unload oysters. The oysters inside the basket can be smoothly removed without detaching the aquaculture basket from the aquaculture cable.

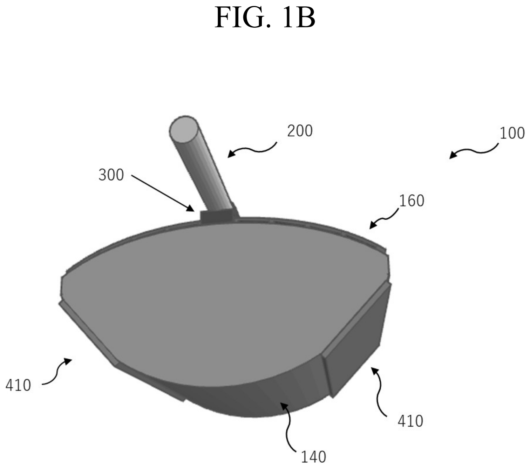

### <FIG. 1B>

FIG. 1B is a view of the aquaculture basket 100 of FIG. 1A as seen from the lower surface 140 on the front surface 110 side.

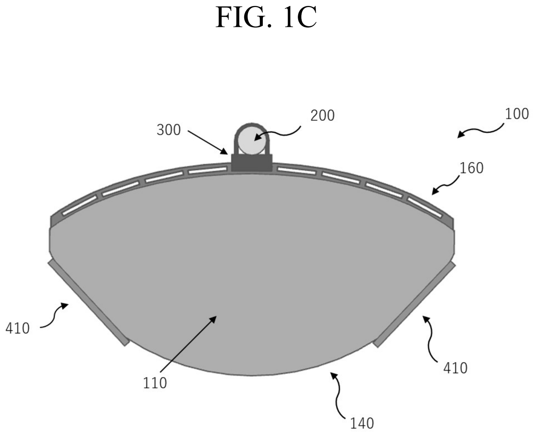

### <FIG. 1C>

FIG. 1C is a view of the aquaculture basket 100 of FIG. 1A as seen from the front surface 110 side. In this view, the lid 410 is closing the opening 400.

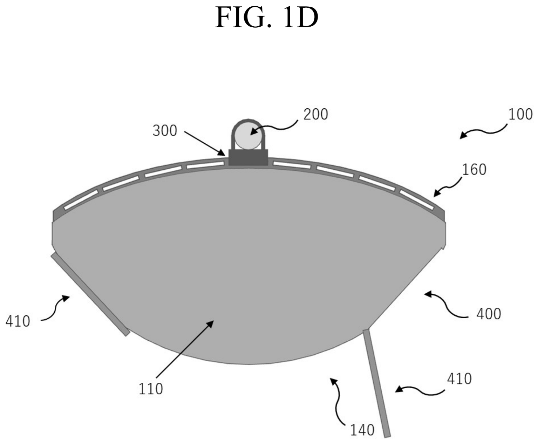

### <FIG. 1D>

FIG. 1D is a view of the aquaculture basket 100 of FIG. 1A as seen from the front surface 110 side. In this view, the lid 410 is open, and the opening 400 is visible.

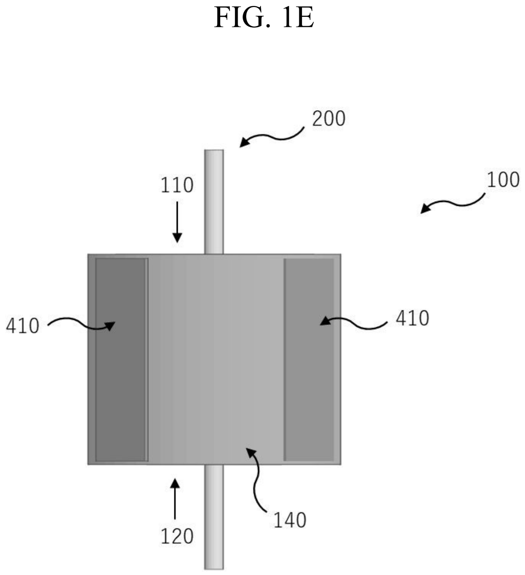

### <FIGS. 1E to 1G>

FIG. 1E is a view of the aquaculture basket 100 of FIG. 1A as seen from the lower surface 140 side. In this figure, the opening 400 is covered by the lid 410. The shape of the opening is preferably substantially rectangular. Assuming that the extension direction of the aquaculture cable is the first direction, it is preferable that the length of the opening 400 in the first direction is 70% or more and 100% or less of the length of the aquaculture basket 100 in the first direction. If the length of the opening 400 in the first direction is too short, it becomes difficult to retrieve the cultured object from the basket.

Assuming that the second direction is perpendicular to the first direction and follows the arc of the lower surface 140 of the aquaculture basket, it is preferable that the length of the opening 400 in the second direction is 15% or more and 35% or less of the length of the lower surface 140 of the aquaculture basket in the second direction.

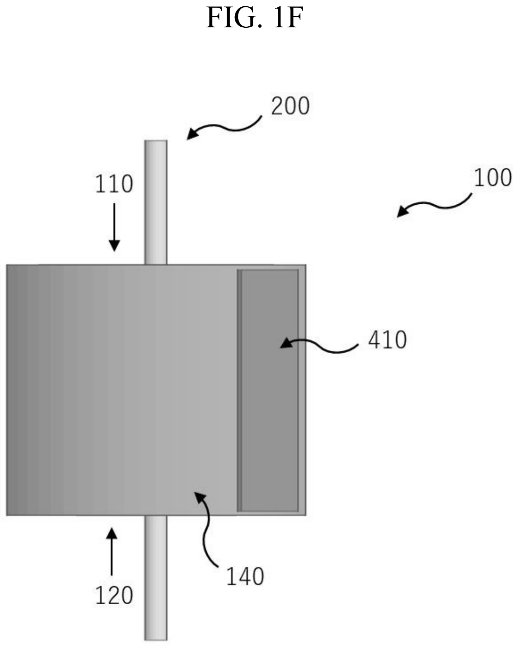

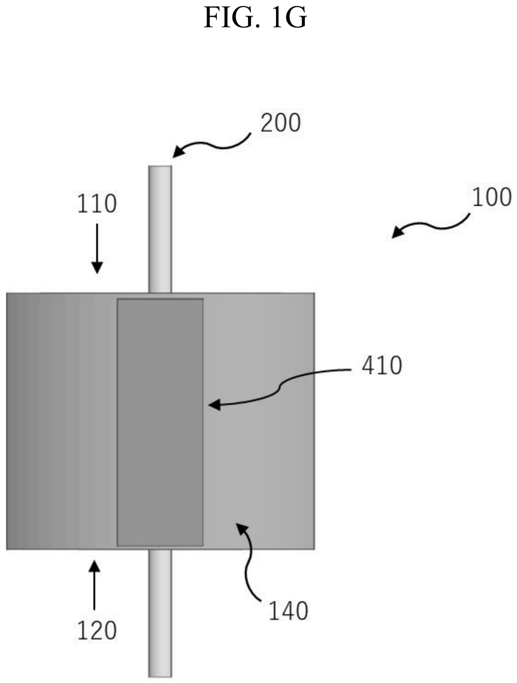

The opening 140 (lid 141) may be provided as two openings as shown in Fig. 1E, or as a single opening as shown in Figs. 1F and 1G. In FIG. 1F, one of the two openings 400 shown in FIG. 1E is removed. In FIG. 1G, a single opening 140 (lid 141) is provided at the center of the lower surface 140.

For example, if the length of the opening 400 in the first direction is 90% of the length of the aquaculture basket 100 in the first direction, and the length of the opening 400 in the second direction is 25% of the length of the lower surface 140 of the aquaculture basket in the second direction, then the area of this opening 400 would be 22.5% (= 25% × 0.9) of the surface area of the lower surface 140. If two such openings are present, the area of the openings 400 would be 45% (= 22.5% × 2) of the surface area of the lower surface 140.

Therefore, it is preferable that the area of the opening 400 of the present invention is 10% or more and 35% or less of the entire area of the lower surface 140. If two openings 400 are provided, it is preferable that the total area of the openings 400 is 20% or more and 70% or less of the entire area of the lower surface 140.

### <FIG. 2A>

FIG. 2A is a photograph of the actual aquaculture basket 100. The aquaculture basket 100 is suspended from a rod simulating an aquaculture cable 200. The lid 410 provided the opening is open, showing the opening 400.

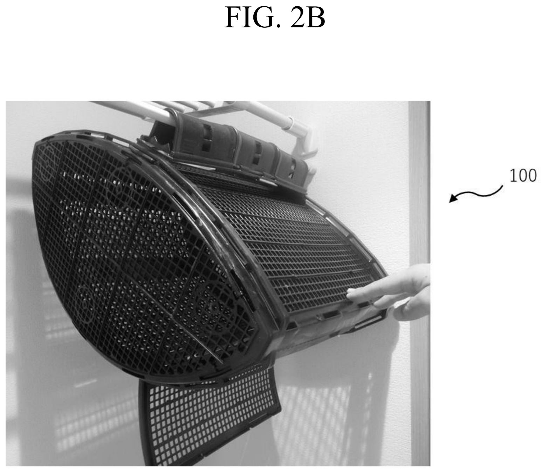

### <FIG. 2B>

FIG. 2B is a photograph showing the aquaculture basket 100 from FIG. 2A in a slightly tilted state.

### <FIG. 2C>

FIG. 2C is an illustration showing the aquaculture basket 100 from FIG. 2A in a slightly tilted state. Since the lower surface of the basket is approximately arcuate, tilting the basket does not significantly change the angle of the surface on which oysters 10 are arranged. Therefore, the risk of the oysters 10 suddenly falling from the opening can be suppressed.

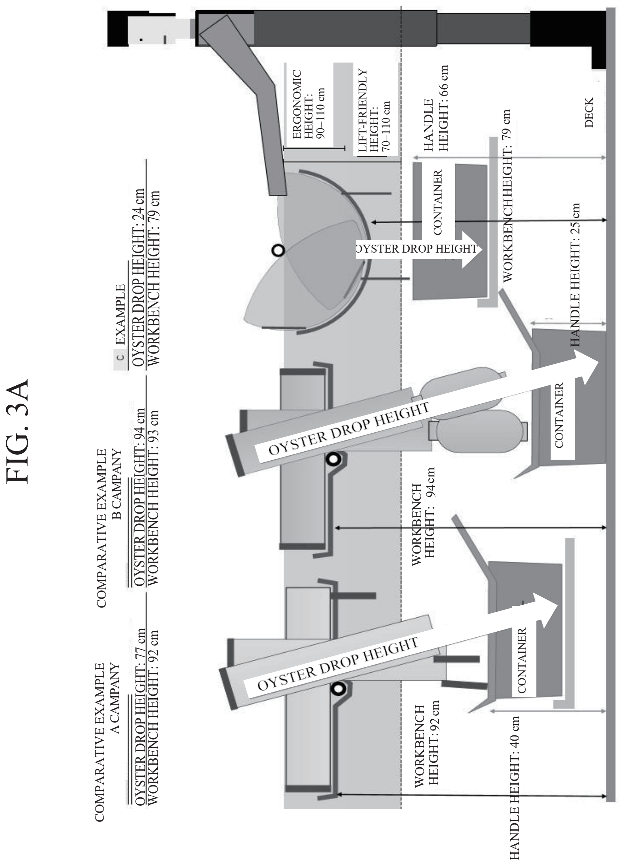

### <FIG. 3A>

The effects of the present invention are explained in comparison with conventional techniques.

In the present invention, harvesting can be performed simply by opening the lid of the basket and rotating the basket, allowing the work to be done at a minimal height (e.g., hip level). This enables containers to be positioned within easy reach of workers, making it easier for them to move heavy containers.

In the aquaculture basket 100 of the present invention, access openings are provided on the cultivation surfaces located near the aquaculture cable. During oyster cultivation, when harvesting or placing oysters into the basket, it is necessary to transfer oysters from the basket to a container or conveyor without detaching the basket from the aquaculture cable for efficiency. In Comparative Examples A and B, the access opening is located not on the bottom but at the end (short side) of a cylindrical basket. Therefore, the center of the basket must be raised in order to remove the oysters. In contrast, the present invention provides an opening on the lower surface of the basket, allowing oysters to be removed without significantly tilting the basket and enabling transfer without applying stress (shock) to the oysters.

In Comparative Example A, oysters fall as much as approximately 77 cm when transferred from the basket to the container. In Comparative Example B, the drop can be up to 94 cm. On the other hand, in the present invention, the basket has an arcuate lower surface and an opening located on the bottom, allowing oysters to be removed gently by rotating the basket. Since the bottom surface is approximately arcuate, rotating the basket does not significantly change the angle of the surface where the oysters are placed. As a result, sudden drops of oysters through the opening can be prevented.

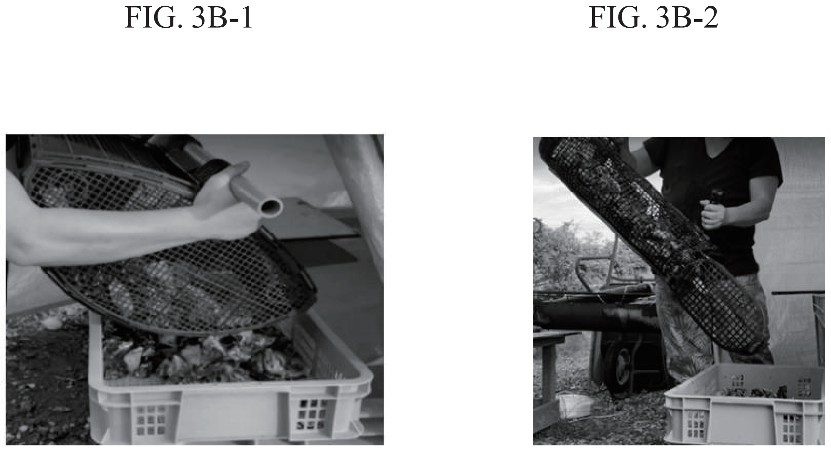

### <FIG. 3B>

FIG. 3A-1 is a photograph of the actual implementation of the present invention. FIG. 3B-2 is an experiment according to a comparative example. With the basket of the present invention, oysters can be efficiently removed without dropping them from a high position, unlike the comparative example shown in FIG. 3B-2.

The invention is not limited to the embodiments described above and may be modified in various ways without departing from the scope and spirit of the invention.

### <FIGS. 4A and 4B>

Examples of connecting multiple aquaculture baskets of the present invention are shown in FIGS. 4A and 4B.

In FIG. 4A, the aquaculture baskets 100 are connected in series along a single aquaculture cable 200. In contrast, as shown in FIG. 4B, it is also possible to connect the aquaculture basket 100 to an aquaculture cable 200 that links two aquaculture cables arranged in parallel.

### [Aquaculture Methods]

Using the aquaculture basket of the present invention described above, in addition to oysters, it is also possible to suitably cultivate abalone, crabs, sea cucumbers, sea urchins, or seaweed in environments such as freshwater, freshwater lakes, brackish water, brackish lakes, estuarine waters, saltwater environments, or tanks. The attachment location of external components such as aquaculture cables or floats can be easily changed. When air drying the basket, floats can be attached to the top of the basket to allow it to dry. It is also possible to use the basket for land-based aquaculture.

### <FIG. 5A>

An example of a seaweed aquaculture method using the aquaculture basket of the present invention. Since the bottom surface of the basket is arcuate, it is easy to rotate the seaweed. After floating the seaweed using water currents or air, it tends to return to the center while rotating, thereby promoting efficient photosynthesis and growth.

### <FIG. 5B>

An example of a sea urchin aquaculture method using the aquaculture basket of the present invention. By regularly discharging water or air from the bottom of the basket, the seaweed used as feed is circulated inside the basket, allowing for uniform feeding without moving the sea urchins. Also, since the leftover feed collects at the bottom, it can be easily collected and visually identified, facilitating cleaning and determining the timing for additional feeding.

### <FIG. 5C>

An example of an abalone aquaculture method using the aquaculture basket of the present invention. By regularly discharging water or air from the bottom of the basket, the seaweed used as feed is circulated inside the basket, allowing for uniform feeding without moving the abalone. Also, since the leftover feed collects at the bottom, it can be easily collected and visually identified, facilitating cleaning and determining the timing for additional feeding.

### <FIG. 5D>

An example of a sea cucumber aquaculture method using the aquaculture basket of the present invention. By injecting air or water from the aquaculture cable to the seabed, the arcuate bottom of the basket more easily embeds into the seabed, allowing mud - the sea cucumber's food - to be efficiently provided. In contrast, flat-bottomed baskets cannot land stably on the seabed and have difficulty embedding in mud.

### <FIG. 5E>

An example of a crab or shrimp aquaculture method using the aquaculture basket of the present invention. By injecting air or water from the aquaculture cable to the seabed, the arcuate bottom of the basket becomes embedded in the seabed, enabling the creation of habitats for crabs.

The surface of the aquaculture basket of the present invention is mesh-shaped in order to fulfill the function of allowing seawater to circulate between the inside and outside of the basket while preventing the cultivated objects, such as oysters, from falling out. However, as long as the component satisfies this function, there are no specific limitations on its shape or material. The shape and size of the holes can be selected according to the intended purpose of cultivation.

The material of the aquaculture basket may be a synthetic resin such as plastic, but other materials may also be used. The thickness of the inner and outer surfaces of the basket is typically about 1.5 to 3 mm, but can be selected appropriately according to the intended use of the basket. In general, the thickness may be 1.5 mm to 10 mm, preferably 1.5 mm to 6 mm, and more preferably 1.5 mm to 4 mm.

The aquaculture cable of the present invention is used to connect the aquaculture basket underwater and is not particularly limited in shape or material. It is appropriate to select the cable considering the size and weight of the aquaculture basket and the number of baskets to be connected. The aquaculture cable may be made of natural or synthetic material.

The aquaculture basket of the present invention is suitable for use in a variety of water environments, such as freshwater, brackish water, estuarine water, and saltwater.

The length of the aquaculture cable is selected based on the intended purpose of use. The figures presented so far depict shorter cables for illustrative purposes, but in practice, the cable may be 50 cm or longer, and in some cases, up to 300 m. The diameter may be approximately 1 cm to 20 cm, though other sizes may also be considered. The cross-sectional shape is not necessarily circular.

The size of the aquaculture basket is also not specifically limited. When cultivating oysters, the front width and height of the basket are typically between 30 cm and 80 cm, but other sizes may be used. For the cultivation of abalone, crabs, sea cucumbers, sea urchins, or seaweed, sizes appropriate to the specific characteristics and sizes of the organisms can be selected. Additionally, the length of the aquaculture basket in the extension direction of the aquaculture cable is often equal to or less than twice the width of the front surface of the basket, but this is not limiting, and the length may be adjusted depending on the intended use.

## Claims

1. An aquaculture basket configured to be placed underwater and connected to an aquaculture cable, the aquaculture basket comprising:
a front surface; a rear surface; an upper surface; and a lower surface,
wherein the front surface and the rear surface are in the extension direction of the aquaculture cable,
wherein the lower surface has a downward convex curved shape as viewed from the front side, and
wherein the lower surface includes an opening for insertion and removal of aquaculture objects.

2. The aquaculture basket according to claim 1, further comprising:
an auxiliary portion for connecting an external component to the aquaculture basket; and
a joint portion for attaching the auxiliary portion to a surface of the aquaculture basket.

3. The aquaculture basket according to claim 1 or 2, wherein, when connected to the aquaculture cable, the aquaculture basket configured to swing about the aquaculture cable as a rotation axis in response to waves or swells.
